# DEMANDE DE BREVET EUROPEEN

(11) **EP 1 071 015 A1**
(43) Date de publication de la demande: **24.01.2001**
(21) Numéro de dépôt: 00402055.8
(22) Date de dépôt: 19.07.2000
(51) Int. Cl.: G06F 9/44

(54) **Système de stockage en réseau**

(30) Priorité: 22.07.1999 FR 9909544
(71) Demandeur: BULL S.A., 78430 Louveciennes (FR)
(72) Inventeur: Couvée, Philippe, 38190 Villard-Bonnot (FR); Chalard, Jean-François, 38190 Froges (FR)

(57) **Abrégé**

Un objet (100) correspondant à une machine (1) qui comprend au moins un coupleur local (11) pour échanger des données avec des sous-systèmes de stockage (5, 6, 7) d'un système de stockage en réseau, chaque sous-système de stockage (5, 6, 7) comprenant au moins une unité de stockage identifiable au moyen d'un numéro logique d'unité (LUN). L'objet (100) comprend un objet (101) correspondant au coupleur local (11) de la machine (1), tel que l'objet (101) comprend un objet (111) correspondant à un coupleur distant (51, 52) de l'un des sous-systèmes de stockage (5) et tel que l'objet (101) comprend une méthode (116) pour obtenir de l'objet (111), une liste d'objets (118, 119) correspondant chacun à un numéro logique d'unité (LUN) identifiant une unité de stockage du sous-système (5) accessible par le coupleur local (11).

## Description

Le domaine de l'invention est celui du stockage de masse d'informations partagées en tout ou partie par plusieurs machines informatiques. Un système de stockage en réseau comprend plusieurs sous-systèmes de stockage accessibles au moyen d'un réseau constitué de réticules (fabric en anglais) et de boucles (loop en anglais). Un sous système de stockage comprend des unités de stockage constituées de supports enregistrables tels que des bandes magnétiques, des disques magnétiques ou optiques réinscriptibles.

Chaque unité de stockage est identifiée par un numéro d'unité logique (LUN pour Logical Unit Number en anglais) pour permettre aux machines connectées sur le réseau, d'accéder aux unités de stockage. Pour accéder à une unité de stockage, une machine envoie un message adressé par le numéro d'unité logique sur un coupleur d'entrée sortie connecté au réseau. Le réseau se charge d'acheminer le message jusqu'à un coupleur d'entrée sortie du sous-système de stockage contenant l'unité de stockage identifiée par le numéro d'unité logique.

Le système de stockage en réseau apporte souplesse et économie dans la gestion quotidienne par les administrateurs système. Ceci présente cependant l'inconvénient de rendre visible à toute machine connectée sur le réseau, les unités de stockage utilisées par les autres machines. Apparaissent alors des problèmes de protection des données contre les erreurs humaines ou matérielles telles que par exemple un effacement accidentel.

Une solution possible est de vérifier dans chaque sous système de stockage, des droits d'accès à ses unités de stockage par les machines connectées sur le réseau. Cependant ceci nécessite pour le moins une double gestion des droits d'accès, à la fois sur les sous systèmes de stockage et sur chaque machine pour lui éviter des tentatives infructueuses d'accès. D'autre part, un sous-système de stockage standard du commerce ne possède pas nécessairement les fonctionnalités pour faire des contrôles d'accès.

Une autre solution consiste à configurer une machine de façon à ce que son système d'exploitation ne connaisse que les numéros d'unité logique identifiant des unités de stockage dont l'accès par cette machine lui est autorisé. Ceci nécessite de prévoir la possibilité de reconfigurer la machine sans l'arrêter lorsqu'on veut ajouter une ressource telle qu'une unité de stockage supplémentaire. Lorsque toutes les unités de stockage d'un sous système de stockage sont ignorés de la machine, la machine ne dispose d'aucun chemin d'accès à ce sous système de stockage, sur le réseau. Ceci pose des difficultés pour mettre à disposition de la machine, une unité de stockage appartenant un sous-système de stockage ignoré de la machine.

Pour palier les inconvénients précités de l'état de la technique connu, l'invention propose un objet correspondant à une machine qui comprend au moins un coupleur local pour échanger des données avec des sous-systèmes de stockage d'un système de stockage en réseau. Chaque sous-système de stockage comprenant au moins une unité de stockage identifiable au moyen d'un numéro logique d'unité, l'objet correspondant à la machine comprend un objet correspondant au coupleur local de la machine, caractérisé en ce que l'objet correspondant au coupleur local comprend un objet correspondant à un coupleur distant de l'un des sous-systèmes de stockage et en ce que l'objet correspondant au coupleur local comprend une méthode pour obtenir de l'objet correspondant au coupleur distant, une liste d'objets correspondant chacun à un numéro logique d'unité identifiant une unité de stockage du sous-système de stockage accessible par le coupleur local.

Ainsi, même si la liste d'objets correspondant chacun à un numéro logique d'unité identifiant une unité de stockage du sous-système de stockage accessible par le coupleur local, est vide, l'objet correspondant au coupleur distant permet à l'objet correspondant au coupleur local, d'obtenir au moyen de ladite méthode, un objet correspondant à un numéro logique d'unité identifiant une unité de stockage pour remplir ladite liste.

La description d'une mise en oeuvre particulière de l'invention, suit en référence aux figures où:
- la figure 1 représente un dispositif de stockage partagé par plusieurs machines;
- la figure 2 représente un objet correspondant à une machine de la figure 1.
- la figure 3 représente un procédé de reconnaissance de réseau.

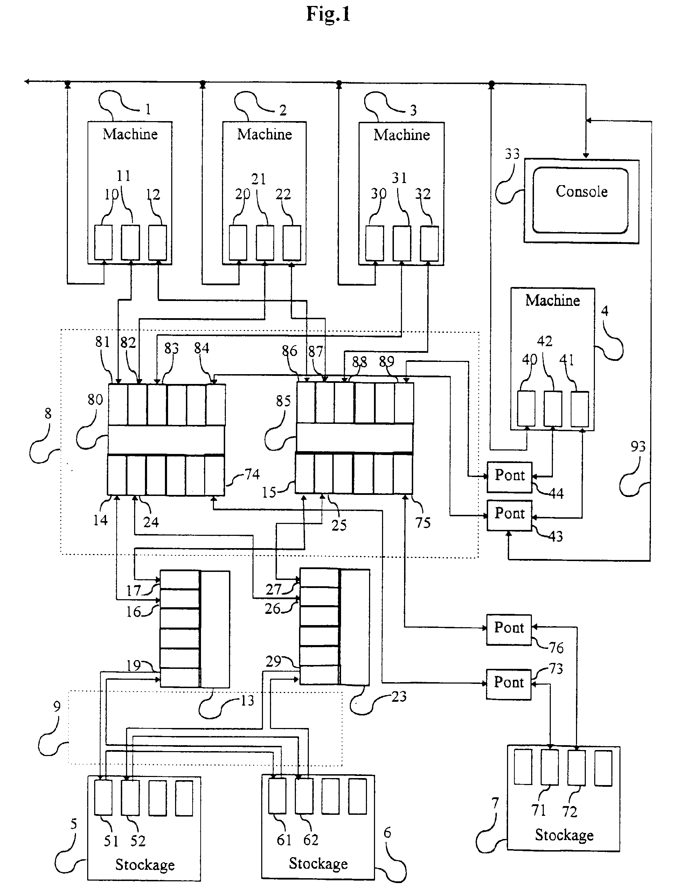

En référence à la figure 1, un système de stockage en réseau est prévu pour différentes machines 1, 2, 3, 4. Le système de stockage comprend différents sous-systèmes de stockage 5, 6, 7. Le système de stockage comprend un ou plusieurs réseaux réticulaires dits réticule 8 (fabric selon la terminologie anglaise) et ou un ou plusieurs réseaux en boucle dits boucle 9 (loop selon la terminologie anglaise).

La machine 1 échange des données avec le système de stockage au moyen de coupleurs 11, 12. La machine 2 échange des données avec le système de stockage au moyen de coupleurs 21, 22. La machine 3 échange des données avec le système de stockage au moyen de coupleurs 31, 32. La machine 4 échange des données avec le système de stockage au moyen de coupleurs 41, 42.

Un commutateur 80 (switch selon la terminologie anglaise) comprend des coupleurs 14, 24, 74, 81, 82, 83, 84. Un commutateur 85 comprend des coupleurs 15, 25, 75, 86, 87, 88, 89. Un coffret de brassage 13 (hub selon la terminologie anglaise) comprend des coupleurs 16, 17, 19. Un coffret de brassage 23 comprend des coupleurs 26, 27, 29.

Le réticule 8 est constitué par les commutateurs 80, 85 et une liaison physique bidirectionnelle du coupleur 11 au coupleur 81, une liaison physique bidirectionnelle du coupleur 21 au coupleur 82, une liaison physique bidirectionnelle du coupleur 31 au coupleur 83, une liaison physique bidirectionnelle d'un pont 43 au coupleur 84, une liaison physique bidirectionnelle du coupleur 12 au coupleur 86, une liaison physique bidirectionnelle du coupleur 22 au coupleur 87, une liaison physique bidirectionnelle du coupleur 32 au coupleur 88, une liaison physique bidirectionnelle d'un pont 44 au coupleur 89, une liaison physique bidirectionnelle du coupleur 14 au coupleur 16, une liaison physique bidirectionnelle du coupleur 24 au coupleur 26, une liaison physique bidirectionnelle du coupleur 74 à un pont 73, une liaison physique bidirectionnelle du coupleur 15 au coupleur 17, une liaison physique bidirectionnelle du coupleur 25 au coupleur 27, une liaison physique bidirectionnelle du coupleur 75 à un pont 76.

Le commutateur 80 avec ses liaisons physiques bidirectionnelles d'une part et le commutateur 85 avec ses liaisons physiques bidirectionnelles d'autre part assurent une redondance de chemins possibles pour transmettre des données dans le réticule 8 en cas d'indisponibilité d'un chemin.

Le sous-système 5 échange des données pour le compte du système de stockage au moyen de coupleurs 51, 52. Le sous-système 6 échange des données pour le compte du système de stockage au moyen de coupleurs 61, 62. Le sous-système 7 échange des données pour le compte du système de stockage au moyen de coupleurs 71, 72.

La boucle 9 est constituée par les coffrets de brassage 13, 23 et une liaison physique monodirectionnelle du coupleur 19 au coupleur 51, une liaison physique monodirectionnelle du coupleur 51 au coupleur 61, une liaison physique monodirectionnelle du coupleur 61 au coupleur 19, une liaison physique monodirectionnelle du coupleur 29 au coupleur 52, une liaison physique monodirectionnelle du coupleur 52 au coupleur 62, une liaison physique monodirectionnelle du coupleur 62 au coupleur 29.

Le coffret de brassage 13 avec ses liaisons physiques monodirectionnelles d'une part et le coffret de brassage 23 avec ses liaisons physiques monodirectionelles d'autre part assurent une redondance de chemins possibles pour transmettre des données dans la boucle 9 en cas d'indisponibilité d'un chemin.

De façon à ce que les machines accèdent aux sous-systèmes de stockage par le réticule 8 et la boucle 9 avec des performances comparables à celles d'un bus d'entrée-sortie, la technologie de transmission des données sur les liaisons physiques précédemment décrites évite la perte de données en cas de congestion de réseau. Le contrôle de flux de données est réalisé par des techniques connues de crédit d'autorisation de transmission comme pour des canaux d'entrée-sortie. La technologie de transmission est également compatible avec des protocoles réseaux qu'il est souhaitable d'utiliser sur le réticule 8 ou la boucle 9. Un exemple de technologie actuellement disponible est celle connue sous le nom de Fiber Channel, standard ANSI (American National Standards Industrie).

Les ponts 43 et 44 effectuent une adaptation de la technologie de transmission dans le réticule 8 à une technologie de transmission différente sur les coupleurs 41, 42. Les ponts 73 et 76 effectuent une adaptation de la technologie de transmission dans le réticule 8 à une technologie de transmission différente sur les coupleurs 71, 72. Une liaison bidirectionnelle entre le coupleur 41 et le pont 43, une liaison bidirectionnelle entre le coupleur 42 et le pont 44, une liaison bidirectionnelle entre le coupleur 71 et le pont 73, une liaison bidirectionnelle entre le coupleur 72 et le pont 76, sont de type canal d'entrée sortie comme par exemple dans la technologie de transmission SCSI (Small Computer System Interface en anglais), standard actuellement disponible.

Une console 33 permet d'administrer l'accessibilité au système de stockage par les machines 1, 2, 3, 4, au moyen d'un bus relié à la machine 1 par un coupleur 10, à la machine 2 par un coupleur 20, à la machine 3 par un coupleur 30, à la machine 4 par un coupleur 40. La notion de bus est à prendre au sens large, ce peut être un réseau utilisant le protocole connu TCP/IP.

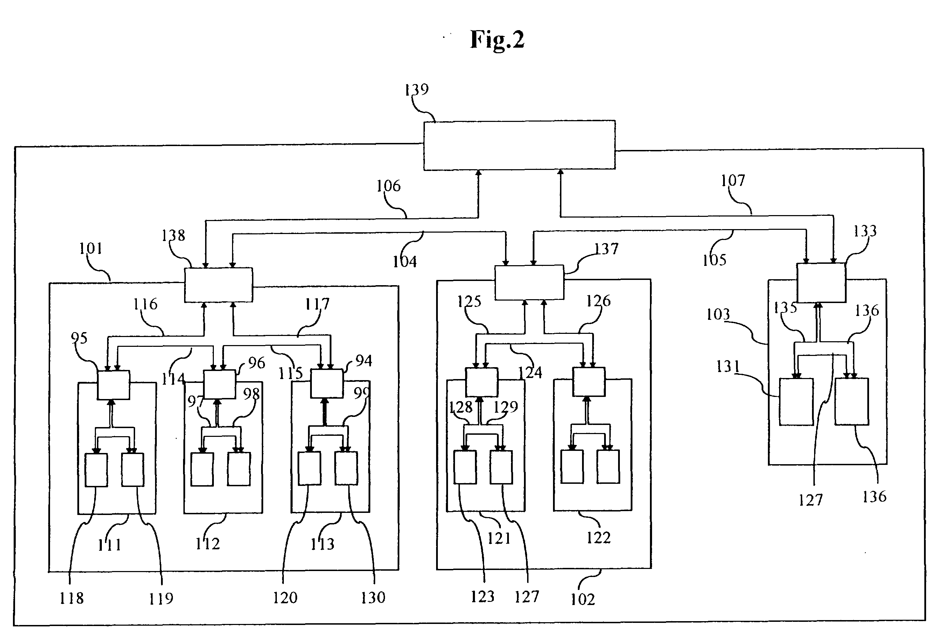

Chacune des machine 1, 2, 3, 4 dispose d'un système d'exploitation (OS pour operating system selon la terminologie anglaise) pour exécuter des applications au moyen des ressources physiques et logicielles dont elle dispose. Chaque ressource à disposition du système d'exploitation, correspond à un objet virtuel, défini en structure hiérarchique comme expliqué à présent en référence à la figure 2.

Au sommet de la structure hiérarchique, existe un objet 100 qui correspond à une machine. L'objet 100 est composé d'objets 101, 102, 103 et de méthodes 104, 105, 106, 107 dont des actions sur les objets 101, 102, 103 déterminent un comportement de l'objet 100. Les objets 101, 102, 103, composant l'objet 100 constituent des objets fils de l'objet 100 qui constitue alors un objet père de ces objets fils.

L'objet 102 est composé d'objets 121, 122 et de méthodes 124, 125, 126 dont des actions sur les objets 121, 122 déterminent un comportement de l'objet 102. Les objets 121, 122 composant l'objet 102 constituent des objets fils de l'objet 102 qui constitue alors un objet père de ces objets fils.

L'objet 121 est composé d'objets 123, 127 et de méthodes 128, 129 dont des actions sur les objets 123, 127 déterminent un comportement de l'objet 121. Les objets 123, 127 composant l'objet 121 constituent des objets fils de l'objet 121 qui constitue alors un objet père de ces objets fils.

La structure est hiérarchique en ce que les objets 123, 127 constituent des objets fils de l'objet 121, l'objet 121 constitue un objet père pour les objets 123, 127 et un objet fils pour l'objet 102, l'objet 102 constitue un objet père pour les objets 121, 122 et un objet fils pour l'objet 100.

Lorsque l'objet 100 correspond à la machine 1, l'objet 103 correspond par exemple à une ressource de nature matérielle telle qu'un microprocesseur de la machine 1. L'objet 103 a pour objets fils plusieurs objets 131, 132. L'objet 131 correspond à une antémémoire (memory cache en Anglais) de niveau 1 du microprocesseur. L'objet 132 correspond à une unité arithmétique et logique. Une méthode 135 permet d'agir sur l'objet 131 pour faire des purges d'antémémoire ou de la cohérence antémémoire. La méthode 135 est accessible par une méthode 107 de l'objet 100 au moyen d'une interface 133. Une méthode 136 permet d'agir sur l'objet 132 pour faire des interruptions ou d'autres commandes de processeur. La méthode 136 est accessible par une méthode 105 de l'objet 100 au moyen de l'interface 133. L'interface 133 comprend des données nommées qui déterminent l'existence de l'objet 103 dans l'objet 100. On distingue parmi ces données des attributs tels qu'un numéro d'identification, un numéro de version de microprocesseur ou encore une localisation physique de microprocesseur dans la machine 1, et des données de méthodes telles que des noms des méthodes 135, 136 avec des valeurs d'entrée et de sortie des méthodes 135, 136, accessibles aux méthodes 105, 107 de l'objet 100. Une méthode 134 permet des interactions entre l'objet 131 et l'objet 132 pour contrôler des échanges de données entre des registres d'unité arithmétique et logique et des lignes d'antémémoire. La méthode 134 ne communiquant pas avec l'interface 133, n'est pas visible de l'objet 100.

De même que les objets 131, 132 correspondent à des composants physiques tels qu'antémémoire et unité arithmétique et logique, les méthodes 134, 135, 136 correspondent en tout ou partie à des circuits câblés ou des microprogrammes gravés sur silicium.

Une interface 139 permet à des objets applicatifs, non représentés, d'utiliser l'objet 100. Les objets applicatifs correspondent à des programmes exécutés par la machine 1. Les méthodes 104, 105, 106, 107 constituent le système d'exploitation de la machine 1. La méthode 107 est par exemple une méthode d'adressage virtuel accessible aux objets applicatifs par l'interface 107.

Lorsque l'objet 102 correspond à une mémoire physique de la machine 1, la méthode 105 est une méthode d'adressage réel qui accède en lecture et en écriture à la mémoire physique au moyen d'une interface 137. En absence de méthode entre l'objet 102 et l'interface 139, la mémoire physique de la machine 1 n'est pas visible des objets applicatifs. Par souci de clarté, la figure 2 n'est pas une représentation exhaustive de tous les objets correspondant à des composants de la machine 1. Par exemple, la méthode 105 peut interagir avec un objet non représenté qui correspond à un bus système de la machine 1.

L'objet 101 correspond à un coupleur local de la machine à laquelle correspond l'objet 100. Une interface 138 permet à l'objet 100 d'agir sur l'objet 101. L'interface 138 comprend divers attributs de l'objet 101 tels qu'un identificateur du coupleur 11 lorsque l'objet 101 correspond au coupleur 11 ou un identificateur du coupleur 12 lorsque l'objet 101 correspond au coupleur 12, un protocole de communication du coupleur correspondant tel que FiberChannel ou SCSI, une localisation physique du coupleur correspondant dans la machine.

Selon une particularité de l'invention, l'objet 101 comprend des objets 111 correspondant chacun à un coupleur distant de l'un des sous-systèmes de stockages 5, 6, 7 accessible depuis le coupleur local par le réticule 8 et ou la boucle 9. Selon l'exemple de la figure 1, il existe un objet du type de l'objet 111 pour chaque coupleur distant 51, 52, 61, 62, 71, 72.

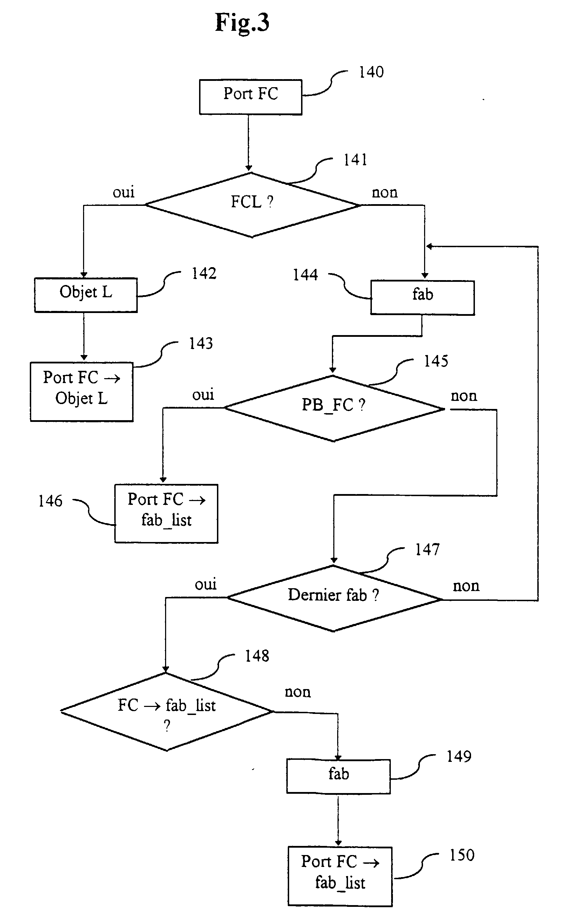

L'objet 101 comprend un objet 112 qui correspond à un coupleur de réseau auquel est directement raccordé le coupleur local auquel correspond l'objet 101. Lorsque l'objet 101 correspond au coupleur 11, l'objet 112 correspond au coupleur 81. L'objet 112 met à disposition de l'objet 101 au moyen d'une interface 96 et de méthodes internes à l'objet 112, des identificateurs de réticule et ou de boucle accessibles par le coupleur auquel correspond l'objet 112 avec associé à chaque réticule et ou chaque boucle, une liste de coupleurs de commutateurs 80, 85, de coffrets de brassage 13, 23 de réseau et ou de coupleurs distants d'un sous système de stockage. L'obtention de l'objet 112 sera expliquée en référence à la figure 3.

L'interface 138 comprend une liste LCD (Liste de Coupleurs Distants) des objets 111, 113, accessibles au moyen de méthodes 116, 117, à l'objet 100. Initialement, la liste LCD est vide, des méthodes constructeur 114, 115 permettent de créer les objets 111, 113 à partir de l'objet 112, de façon à remplir la liste LCD. Chaque objet 111, 113, comprend toutes les données nécessaires à établir des communications entre le coupleur local et le coupleur distant auquel ils appartiennent.

L'objet 111 comprend des objets 118, 119, correspondant chacun à un numéro logique d'unité LUN qui identifie une unité de stockage dans le sous-système de stockage auquel appartient le coupleur distant auquel correspond l'objet 111. Par exemple, si l'objet 111 correspond au coupleur distant 51, l'objet 118 correspond à un numéro logique d'unité LUN qui identifie une unité de stockage dans le sous-système de stockage 5.

L'objet 111, correspondant au coupleur distant 51, met à disposition de l'objet 101, au moyen d'une interface 95, une liste CLL d'objets 118, 119 correspondant chacun à un numéro logique de l'unité de stockage 5. D'autres objets du type de l'objet 111, non représentés, correspondant au coupleur distant 52, 61, 62, 71, 72, mettent respectivement à disposition de l'objet 101, chacun une liste CLL de numéro logiques de l'unités de stockage 5, 6, 7.

L'objet 100 obtient la liste CLL d'objets 118, 119 de l'objet 111 au moyen de l'interface 138 et de la méthode 116. La méthode 116 est paramétrable pour masquer un ou plusieurs objets de la liste CLL. Cependant, même si la liste CLL telle que transmise par la méthode 116 est vide, l'objet 111 continue à exister. La méthode 116 est alors à même de donner un numéro logique d'unité de stockage dès qu'il est démasqué car disponible par l'objet 111.

Pour paramétrer la méthode 116, des valeurs de paramétrage sont disponibles dans l'interface 138 à la méthode 106 qui agit sur ces valeurs. La méthode 106 est accessible par l'interface 139 à une application d'administration du système de stockage en réseau. L'application d'administration dispose d'une interface graphique sur la console 33 qui permet à un administrateur du système de stockage en réseau de positionner et de modifier les dites valeurs de façon à masquer ou démasquer des numéros logiques d'unité de stockage. Les positionnements et les modifications générées sur la console 33 sont transmises sur la machine 1 par le coupleur 10.

Les explications qui précèdent lorsque l'objet 100 correspond à la machine 1, restent valables lorsque l'objet 100 correspond à une machine 2, 3. Les positionnements et les modifications de valeurs générées sur la console 33 à destination d'objets 100 représentant les machines 2, 3, sont transmises sur les machines 2, 3, respectivement par les coupleurs 20, 30.

Lorsque l'objet 100 correspond à la machine 4, il existe un objet du type de l'objet 101 correspondant au coupleur 41 et un objet du type de l'objet 101 correspondant au coupleur 42. Les explications qui suivent pour l'objet 101 correspondant au coupleur 41 restent valables pour l'objet 101 correspondant au coupleur 42.

L'objet 101 comprend un objet 113 correspondant au pont 43 d'entrée sur le système de stockage. L'objet 113 comprend des objets 120, 130, correspondant chacun à un numéro logique d'unité LUN qui identifie une unité de stockage dans le système de stockage. L'objet 113 met à disposition de l'objet 101, les objets 120, 130 au moyen d'une interface 94.

L'objet 100 obtient la liste CLL d'objets 120, 121 de l'objet 113 au moyen de l'interface 138 et de la méthode 117. L'objet 113 comprend au moins une méthode 99 qui est paramétrable pour contrôler la fourniture d'objets de la liste CLL.

Pour paramétrer la méthode 99, des valeurs de paramétrage sont disponibles sur le pont 43, respectivement 44 de sorte que la méthode 99 n'est pas directement accessible à l'objet 101. La méthode 99 est accessible à l'application d'administration du système de stockage en réseau, par une liaison directe 93 de la console 33 au pont 43. L'interface graphique de l'application d'administration, permet sur la console 33, à l'administrateur du système de stockage en réseau de positionner et de modifier les dites valeurs de façon à contrôler la fourniture de numéros logiques d'unité de stockage. Dans une variante, les positionnements et les modifications générées sur la console 33 sont transmises sur la machine 4 par le coupleur 40.

La figure 3 présente un processus pour obtenir l'objet 112.

Pour chaque coupleur local 11, 12, 21, 22, 31, 32, 41, 42, relié au réseau, le processus active une étape 140 pour reconnaître, en tant que port FC, ce coupleur lors d'une configuration respectivement de la machine 1, 2, 3, 4.

Une étape 141 teste si ce coupleur est relié à une boucle privée FCL. Si la réponse est oui, le processus active une étape 142 qui crée un nouvel objet L correspondant à une boucle privée. Une étape 143 attache le coupleur à cette boucle, c'est à dire crée l'objet 112 avec comme attribut l'identificateur de cette boucle. Dans l'exemple de système décrit en référence à la figure 1, il n'existe pas de coupleur local de machine relié à une boucle. Cependant, l'homme du métier n'a pas de peine à imaginer de telles machines connectées de manière similaires aux sous systèmes de stockage 5, 6, sur la boucle 9.

Si la réponse est non, cela signifie que le coupleur local de la machine est connecté sur un réticule. Dans l'exemple de la figure 1, c'est le cas des machines 1, 2, 3, 4 qui accèdent au système de stockage par le réticule 8.

Le processus active alors une étape 144 qui identifie chaque réticule répertorié dans une liste de réticules fab du système de stockage, en commençant par le premier réticule de la liste. Cette liste est initialement vide.

Une étape 145 teste si un coupleur PB_FC auquel est physiquement relié le coupleur local, est un coupleur de ce réticule. Dans le réticule 8, c'est le cas respectif du coupleur 11, 12, 21, 22, 31, 32, 41, 42, respectivement pour le coupleur 81, 86, 82, 87, 83, 88, 84, 89.

Si la réponse à l'étape 145 est oui, une étape 146 ajoute le port FC à une liste de ports du réticule identifié. L'étape 146 attache le coupleur local au réticule identifié, c'est à dire crée l'objet 112 avec comme attribut l'identificateur de ce réticule. Le processus est alors terminé.

Si la réponse à l'étape 145 est non, une étape 147 teste si le réticule identifié est le dernier de la liste de réticules.

Si la réponse à l'étape 147 est non, l'étape 144 est réactivée pour le réticule suivant de la liste de réticules.

Si la réponse à l'étape 147 est oui, une étape 148 teste si le coupleur local ne correspond à aucun port FC dans un réticule.

Si la réponse réciproque à l'étape 148 est non, une étape 149 définie un nouveau réticule ajouté à la liste de réticule du système et y attache le coupleur local, c'est à dire crée l'objet 112 avec comme attribut l'identificateur de ce réticule. Le processus est alors terminé.
L'objet 112 donne alors une liste d'objets de connexion correspondant à tous les coupleurs reliés à une boucle ou à un réticule qui permet de proche en proche d'accéder aux coupleurs distants. La méthode 114 permet alors de construire tout objet 111, 113 correspondant à un coupleur distant.

## Revendications

1. Objet (100) correspondant à une machine (1) qui comprend au moins un coupleur local (11) pour échanger des données avec des sous-systèmes de stockage (5, 6, 7) d'un système de stockage en réseau, chaque sous-système de stockage (5, 6, 7) comprenant au moins une unité de stockage identifiable au moyen d'un numéro logique d'unité (LUN), l'objet (100) comprenant un objet (101) correspondant au coupleur local (11) de la machine (1), caractérisé en ce que l'objet (101) comprend un objet (111) correspondant à un coupleur distant (51, 52) de l'un des sous-systèmes de stockage (5) et en ce que l'objet (101) comprend une méthode (116) pour obtenir de l'objet (111), une liste d'objets (118, 119) correspondant chacun à un numéro logique d'unité (LUN) identifiant une unité de stockage du sous-système (5) accessible par le coupleur local (11).

2. Objet (100) selon la revendication 1, caractérisé en ce que la méthode (116) est paramétrable pour masquer un ou plusieurs objets de la liste d'objets (118, 119).

3. Objet (100) correspondant à une machine (4) qui comprend au moins un coupleur local (41) pour échanger des données avec des sous-systèmes de stockage (5, 6, 7) d'un système de stockage en réseau, chaque sous-système de stockage (5, 6, 7) comprenant au moins une unité de stockage identifiable au moyen d'un numéro logique d'unité (LUN), l'objet (100) comprenant un objet (101) correspondant au coupleur local (41) de la machine (4), caractérisé en ce que l'objet (101) comprend un objet (113) correspondant à un pont (43) du système de stockage et en ce que l'objet (101) comprend une méthode (117) pour obtenir de l'objet (113), une liste d'objets (120, 130) correspondant chacun à un numéro logique d'unité (LUN) identifiant une unité de stockage du système de stockage accessible par le coupleur local (41).

4. Objet (100) selon la revendication 3, caractérisé en ce que l'objet (113) comprend une méthode (99) paramétrable pour contrôler une fourniture de la liste d'objets (120, 130).

5. Objet (100) selon l'une des revendications précédentes, caractérisé en ce que l'objet (101) comprend une méthode constructeur (114) pour construire tout objet (111, 113) correspondant à un coupleur distant en parcourant une liste d'objets de connexion (112).
